# EUROPEAN PATENT SPECIFICATION

(11) **EP 1 168 763 B1**
(45) Date of publication and mention of the grant of the patent: **15.11.2006**
(21) Application number: 01115814.4
(22) Date of filing: 28.06.2001
(51) Int. Cl.: H04L 29/06

(54) **Systems and methods for delegated digest access authorization**
Vorrichtungen und Verfahren für delegierte Zugangsberechtigung von Zusammenfassungsinformation
Systèmes et méthodes d'autorisation déléguée à des informations résumées

(30) Priority: 30.06.2000 US 607989
(43) Date of publication of application: 02.01.2002
(73) Proprietor: MICROSOFT CORPORATION, Redmond, Washington 98052-6399 (US)
(72) Inventor: Damour, Kevin T., F203 Bellevue, WA 98007 (US); Leach, Paul J., Seattle, WA 98102 (US); Cohen, Josh R., Seattle, WA 98102 (US); Fishman, Neil S., Bothell, WA 98012 (US); Kramer, Michael, Yonkers, NY 10705 (US)
(74) Representative: Grünecker, Kinkeldey, Stockmair & Schwanhäusser Anwaltssozietät

(56) References cited:
- US-A- 5 944 824
- US-A- 6 067 623

## Description

### BACKGROUND OF THE INVENTION

### 1. The Field of the Invention

The present invention relates to systems and methods for authenticating user identity in order to authorize access to user protected computer information. More specifically, the present invention relates to systems and methods that provide a one-to-many authenticated request-response by allowing a client to obtain access, through standard Internet protocol, to protected information located on a variety of servers by sending a request to one server and empowering that server to act on behalf of the client in making requests to other servers for the protected information.

### 2. The Prior State of the Art

The explosion of information technology has produced a high volume of electronic communication that requires user identity to be authenticated and communication to remain secure. While methods have been employed to address the need for authenticating user identity, these methods have been less than desirable when using standard Internet protocol and in the area of wireless communications.

One traditional method is known as Basic Authentication. In this method, a user name and password is transmitted between a client and a server to authenticate user identity. Upon authenticating user identity, the server authorizes access to protected information. The use of Basic Authentication between a client and a server over the Internet sends the user name and password in clear text that has not been encrypted and is readable by text editors and word processors. This transmission of a user password is undesirable because the password can be stolen and used to obtain unauthorized access to protected information.

A second method for authenticating user identity is RFC 2617, known as Digest Access Authentication. This method uses a standard Internet protocol, namely, HyperText Transport Protocol ("HTTP"), to employ a challenge-response framework for authenticating user identity without transmitting a cleartext user password between the client and server.

Digest Access Authentication requires multiple round-trip exchanges between a client and a server. By way of example, the client transmits a request for information, such as resources or files, located on the server. The server responds to the request by challenging the user identity at the client. The client answers the challenge from the server in order for the user identity to be authenticated. Having been authorized for access to the information, the client re-transmits a request for the information to the server, and the server responds by transmitting the requested information to the client.

Frequently the resources and/or files desired by a client are located on more than one server. In such situations, Digest Access Authentication requires each of the servers to authenticate the user identity, thereby causing the number of multiple round-trip exchanges with the client to escalate. In cases where the client remotely accesses the servers to obtain the resources and/or files, such as in the area of wireless communication, a high number of multiple round-trip exchanges is undesirable due to limitations introduced by high latencies and low bandwidths.

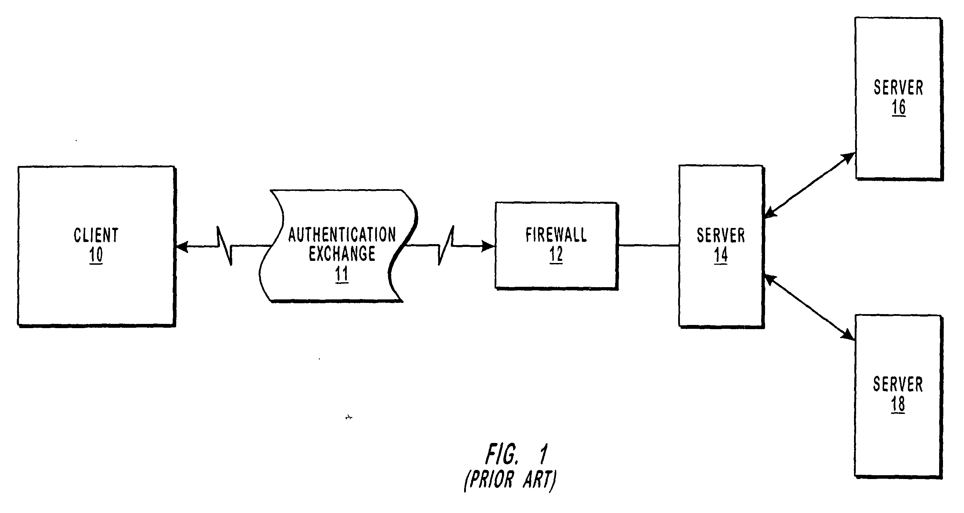

By way of illustration, reference is made to Figure 1, which illustrates an exemplary method for a client using Digest Access Authentication to remotely access information located on a corporation of servers. The networked computer system illustrated in Figure 1 includes a remote client 10 that sends HTTP requests over a wireless connection to a corporation of servers. The corporation of servers includes servers 14, 16, and 18. A firewall 12 is also frequently included in the networked computer system to protect the network.

In Figure 1, client 10 desires information from the corporation of servers. The desired information includes resources and/or files that are located on the servers 14, 16 and 18. Access to the desired information is protected and requires proper authentication of user identity.

Authentication exchange 11 represents all of the exchanges required for client 10 to properly authenticate user identity to the corporation of servers. Such authentication that allows a client 10 to obtain protected information located on servers 14, 16 and 18 requires client 10 to individually authenticate user identity with each of the servers. The following itemizes the requests and/or responses required between client 10 and servers 14, 16 and 18 under the traditional method of Digest Access Authentication to illustrate the high number of multiple round-trip exchanges that are required.

To obtain resources and/or files located on server 14, client 10 requests the information that is located on server 14. In response to the request, server 14 challenges the user identity at client 10. In order to have the user identity authenticated, client 10 answers the identity challenge from server 14. Having been authorized for access to the information, client 10 re-transmits to server 14 an authorized request for the information located on server 14.

A similar set of exchanges are also required between client 10 and server 16 in order to obtain the resources or files desired by client 10 that are located on server 16. To obtain the resources and/or files, client 10 requests the information that is located on server 16. In response to the request, server 16 challenges the user identity at client 10. In order to authenticate the user identity, client 10 answers the identity challenge from server 16. Having been authorized for access to the information, client 10 re-transmits to server 16 an authorized request for the information located on server 16.

Finally, in order to obtain the desired information that is located on server 18, a similar set of exchanges are required between client 10 and server 18. To obtain the resources and/or files on server 18, client 10 requests the information that is located on server 18. In response to the request, server 18 challenges the user identity at client 10. To authenticate the user identity, client 10 answers the identity challenge from server 18. Having been authorized for access to the information, client 10 re-transmits to server 18 an authorized request for the information located on server 18.

This high number of multiple round-trip exchanges, represented by authentication exchange 11 of Figure 1, that are required for client 10 to properly authenticate user identity to servers 14, 16 and 18 is undesirable in cases where client 10 remotely accesses the servers to obtain the resources and/or files, such as in the area of wireless communication, because of the limitations introduced by high latencies and low bandwidths.

As such, traditional methods of authenticating a remote client that employs wireless communication have proven to be inadequate because Basic Authentication exposes the user password and Digest Access Authentication requires too many exchanges with the client due to the high latencies and low bandwidths of wireless communication.

US-A-6,067,623 relates to secure web server gateway access using credential transform. A client executing a commercial browser makes a request for certain data. The request passes through the internet and is presented to web server software executing in a middle tier server. The middle tier server detects a request for resource access and first authenticates the user using user supplied credentials or client certificate. The middle tier server accesses the resource on behalf of the client by mapping the credentials used to access the server into credentials for accessing the resource. The credential mapping includes two parts: ID mapping and credential transform. ID mapping is the process of converting one authentication ID into another ID, and credential transform is the process of locating and using the credentials for the mapped ID. The original client request is finally modified to incorporate the transformed credentials for access to the resource. Access to the resource requires authentication with that resource. An access manager of the middle tier server, therefore, invokes a secondary log-on mechanism specific to that resource. Once authenticated, the original client request will be forwarded to the resource for action.

US-5-A-5,944,824 describes a network security architecture that protects accesses to a plurality of network elements ("NEs"). A user obtains access by sending a request to one or more of the NEs, which goes through a network security server. A network security administrator controls who is allowed to access what NE by creating a new user account record and defining the access privileges for the account in a centralized security database. All access decisions for user requests are made based on information retrieved from the database. The security server verifies the authenticity of a user, establishes mutual trust between a user and an NE and determines the set of NEs that a user is authorized to access. A single sign-on process starts after the user has successfully performed authentication functions to the security server. The security server node stores the user identifiers and passwords to the NEs a user is allowed to access and will send them along with a ticket to the user in response to a successful network authentication and NE access request from the user. A secure terminal server node is responsible for all the procedures involved in the single sign-on process. After the receipt of a user request to access an NE connected to it, the secure terminal server performs verification of the user request and retrieves the user identifier and password data from the ticket in the user request. If single sign-on is requested, a special log-on procedure particular to the NE will be invoked. The procedure uses the supplied user identifier and password to simulate a user log-on to the NE. After the secure terminal server logs on to the connected NE on behalf of the user and executes a change password routine with the NE, the user is securely connected to the NE. Further access control to individual resources and information in the NE is enforced by the local access mechanisms available in the NE.

### SUMMARY OF THE INVENTION

It is the object of the present invention to add flexibility to a delegated access authentication system.

This object is solved by the invention as defined in the independent claims.

Embodiments are given in the dependent claims.

The present invention relates to systems and methods for authenticating user identity in order to authorize access to user protected computer information. More specifically, the present invention relates to systems and methods that provide a one-to-many authenticated request-response by allowing a client to obtain access, through standard Internet protocol, to protected information located on a variety of servers by sending a request to one server and empowering that server to act on behalf of the client in making requests to other servers for the protected information.

Embodiments of the present invention provide a mechanism that requires an initial authentication between a client and a server, referred to as the originating digest access. Upon authentication, the server recognizes the user identity as being valid. The originating digest access includes a client that issues a standard digest access authentication to a server that can be implemented efficiently and demands little space in the request for the fingerprint.

The originating digest access also grants delegated rights to the server according to the initial authentication. The delegated rights empower the server to authenticate a request from the server to one or more end-servers within the same domain on behalf of the client. Such a request to an end-server is referred to as the delegated digest access. The end-server responding to the request verifies the authentication from the originating digest access and verifies the authentication of the delegated digest access before providing access to the protected information.

Therefore, under the present invention, multiple server access is available from a single server that processes user requests, thereby providing a one-to-many authenticated request-response framework in a client-server system. This one-to-many authenticated request-response framework is particularly useful in maintaining security where standard Internet protocol is used across mediums that have high latencies and low bandwidths, such as in the area of wireless communications by minimizing the number of multiple round-trip exchanges needed to authenticate the client to multiple servers.

Additional features and advantages of the invention will be set forth in the description which follows, and in part will be obvious from the description, or may be learned by the practice of the invention. The features and advantages of the invention may be realized and obtained by means of the instruments and combinations particularly pointed out in the appended claims. These and other features of the present invention will become more fully apparent from the following description and appended claims, or may be learned by the practice of the invention as set forth hereinafter.

### BRIEF DESCRIPTION OF THE DRAWINGS

In order that the manner in which the above recited and other advantages and features of the invention are obtained, a more particular description of the invention briefly described above will be rendered by reference to specific embodiments thereof that are illustrated in the appended drawings. Understanding that these drawing depict only typical embodiments of the invention and are not therefore to be considered to be limiting of its scope, the invention will be described and explained with additional specificity and detail through the use of the accompanying drawings in which:
Figure 1 illustrates an exemplary number of round-trip exchanges required for a client to remotely access information located on three servers using the traditional method of Digest Access Authentication;
Figure 2 illustrates an exemplary system that provides a suitable operating environment for the present invention;
Figure 3 is a block diagram that illustrates an exemplary configuration for practicing the present invention, where a remote client obtains a resource and/or file from a variety of servers within a domain;
Figure 4 is a flow chart that details an exemplary embodiment of the initial authentication exchange of Figure 3; and
Figure 5 is a flow chart that details an exemplary embodiment of the delegated authentication exchanges of Figure 3.

### DETAILED DESCRIPTION OF THE INVENTION

The present invention relates to systems and methods for providing a one-to-many authenticated request-response by allowing a client to obtain access, through standard Internet protocol, to protected information located on a variety of servers by sending a request to one server and empowering that server to act on behalf of the client in making requests to other servers for the protected information. Embodiments of the present invention may comprise a special purpose or general-purpose computer including various computer hardware, as discussed in greater detail below.

Embodiments within the scope of the present invention also include computer-readable media for carrying or having computer-executable instructions or data structures stored thereon. Such computer-readable media can be any available media that can be accessed by a general purpose or special purpose computer. By way of example, and not limitation, such computer-readable media can comprise physical storage media such as RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a general purpose or special purpose computer. When information is transferred or provided over a network or another communications connection (either hardwired, wireless, or a combination of hardwired or wireless) to a computer, the computer properly views the connection as a computer-readable medium. Thus, any such a connection is properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

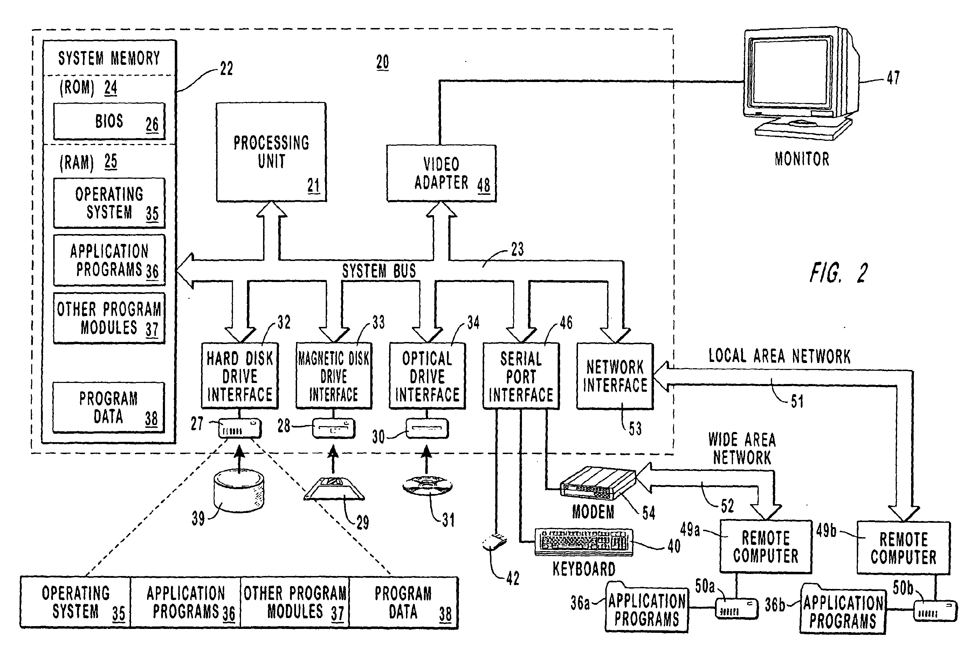

Figure 2 and the following discussion are intended to provide a brief, general description of a suitable computing environment in which the invention may be implemented. Although not required, the invention will be described in the general context of computer-executable instructions, such as program modules, being executed by computers in network environments. Generally, program modules include routines, programs, objects, components, data structures, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those skilled in the art will appreciate that the invention may be practiced in network computing environments with many types of computer system configurations, including personal computers, hand-held devices, multi-processor systems, microprocessor-based or programmable consumer electronics, network PCs, minicomputers, mainframe computers, and the like. The invention may also be practiced in distributed computing environments where tasks are performed by local and remote processing devices that are linked (either by hardwired links, wireless links, or by a combination of hardwired or wireless links) through a communications network. In a distributed computing environment, program modules may be located in both local and remote memory storage devices.

With reference to Figure 2, an exemplary system for implementing the invention includes a general-purpose computing device in the form of a conventional computer 20, including a processing unit 21, a system memory 22, and a system bus 23 that couples various system components including the system memory 22 to the processing unit 21. The system bus 23 may be any of several types of bus structures including a memory bus or memory controller, a peripheral bus, and a local bus using any of a variety of bus architectures. The system memory includes read only memory (ROM) 24 and random access memory (RAM) 25. A basic input/output system (BIOS) 26, containing the basic routines that help transfer information between elements within the computer 20, such as during start-up, may be stored in ROM 24.

The computer 20 may also include a magnetic hard disk drive 27 for reading from and writing to a magnetic hard disk 39, a magnetic disk drive 28 for reading from or writing to a removable magnetic disk 29, and an optical disk drive 30 for reading from or writing to removable optical disk 31 such as a CD-ROM or other optical media. The magnetic hard disk drive 27, magnetic disk drive 28, and optical disk drive 30 are connected to the system bus 23 by a hard disk drive interface 32, a magnetic disk drive-interface 33, and an optical drive interface 34, respectively. The drives and their associated computer-readable media provide nonvolatile storage of computer-executable instructions, data structures, program modules and other data for the computer 20. Although the exemplary environment described herein employs a magnetic hard disk 39, a removable magnetic disk 29 and a removable optical disk 31, other types of computer readable media for storing data can be used, including magnetic cassettes, flash memory cards, digital video disks, Bernoulli cartridges, RAMs, ROMs, and the like.

Program code means comprising one or more program modules may be stored on the hard disk 39, magnetic disk 29, optical disk 31, ROM 24 or RAM 25, including an operating system 35, one or more application programs 36, other program modules 37, and program data 38. A user may enter commands and information into the computer 20 through keyboard 40, pointing device 42, or other input devices (not shown), such as a microphone, joy stick, game pad, satellite dish, scanner, or the like. These and other input devices are often connected to the processing unit 21 through a serial port interface 46 coupled to system bus 23. Alternatively, the input devices may be connected by other interfaces, such as a parallel port, a game port or a universal serial bus (USB). A monitor 47 or another display device is also connected to system bus 23 via an interface, such as video adapter 48. In addition to the monitor, personal computers typically include other peripheral output devices (not shown), such as speakers and printers.

The computer 20 may operate in a networked environment using logical connections to one or more remote computers, such as remote computers 49a and 49b. Remote computers 49a and 49b may each be another personal computer, a server, a router, a network PC, a peer device or other common network node, and typically includes many or all of the elements described above relative to the computer 20, although only memory storage devices 50a and 50b and their associated application programs 36a and 36b have been illustrated in Figure 2. The logical connections depicted in Figure 2 include a local area network (LAN) 51 and a wide area network (WAN) 52 that are presented here by way of example and not limitation. Such networking environments are commonplace in office-wide or enterprise-wide computer networks, intranets and the Internet.

When used in a LAN networking environment, the computer 20 is connected to the local network 51 through a network interface or adapter 53. When used in a WAN networking environment, the computer 20 may include a modem 54, a wireless link, or other means for establishing communications over the wide area network 52, such as the Internet. The modem 54, which may be internal or external, is connected to the system bus 23 via the serial port interface 46. In a networked environment, program modules depicted relative to the computer 20, or portions thereof, may be stored in the remote memory storage device. It will be appreciated that the network connections shown are exemplary and other means of establishing communications over wide area network 52 may be used.

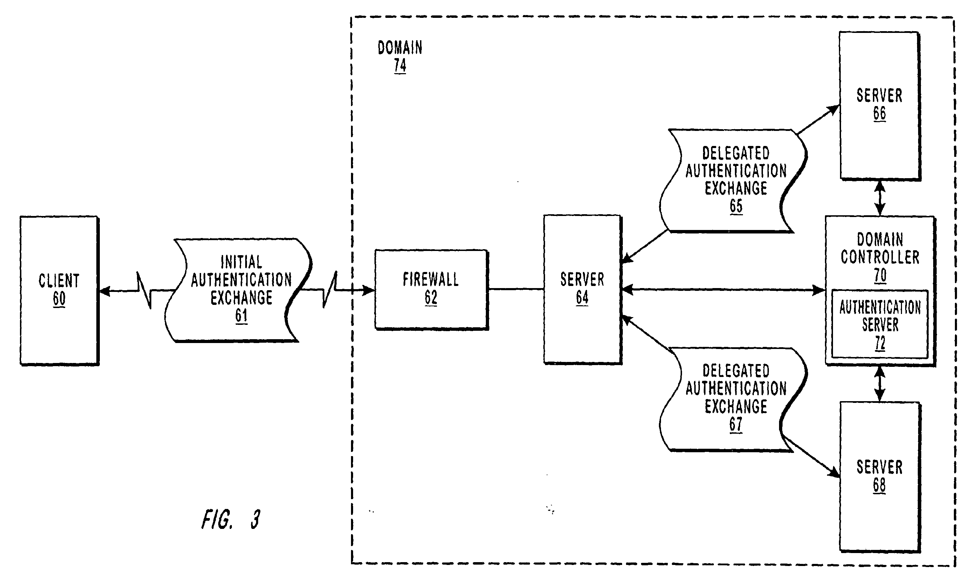

While those skilled in the art will appreciate that the present invention may be practiced in network computing environments with many types of computer system configurations, Figure 3 illustrates an exemplary configuration for a remote client to obtain resources and/or files from a variety of servers within a domain in accordance with the present invention.

In Figure 3, client 60 is a remote client that communicates with servers in a domain 74. By way of example, client 60 can be a telephone, a handheld personal digital assistant ("PDA"), a personal computer, etc., and can communicate with the servers of domain 74 in a variety of different manners. In the illustrated embodiment, client 60 utilizes standard Internet protocol, HyperText Transport Protocol ("HTTP") via wireless communication to request one or more resources and/or files from the servers in domain 74.

Domain 74 includes server 64, server 66, server 68 and domain controller 70. Servers 64, 66 and 68 contain resources and/or files that can be accessed upon proper authentication by client 60. Domain controller 70 manages the security for domain 74. In the disclosure and in the claims the term "domain controller" includes any general user credentials authentication database and may be centralized or distributed. Domain controller 70 includes an authentication server 72 that contains, by way of example, a database of usernames, passwords, permissions, etc. Authentication server 72 also contains account information for the servers within domain 74. A firewall 62 can also be employed for keeping the network secure.

In order for client 60 to obtain resources and/or files from the servers 64, 66 and 68 of domain 74, client 60 sends an initial request for information to a server within the domain 74, such as, by way of example, server 64, and participates in an initial authentication exchange 61 with server 64. The initial authentication exchange 61 authenticates the user identity to server 64 and delegates the rights to allow server 64 to act on behalf of client 60. Server 64 is then able to participate in delegated authentication exchanges, such as delegated authentication exchanges 65 and 67, with other servers within the domain 74 to obtain all of the resources and/or files necessary to process the initial request for information.

In an embodiment of the present invention, the client controls the rights that are delegated. By way of example, a mechanism for a client to control delegation is the request sent from the client. Therefore, the initial request specifically includes an identification of the rights that the client delegates in order to authenticate user identity.

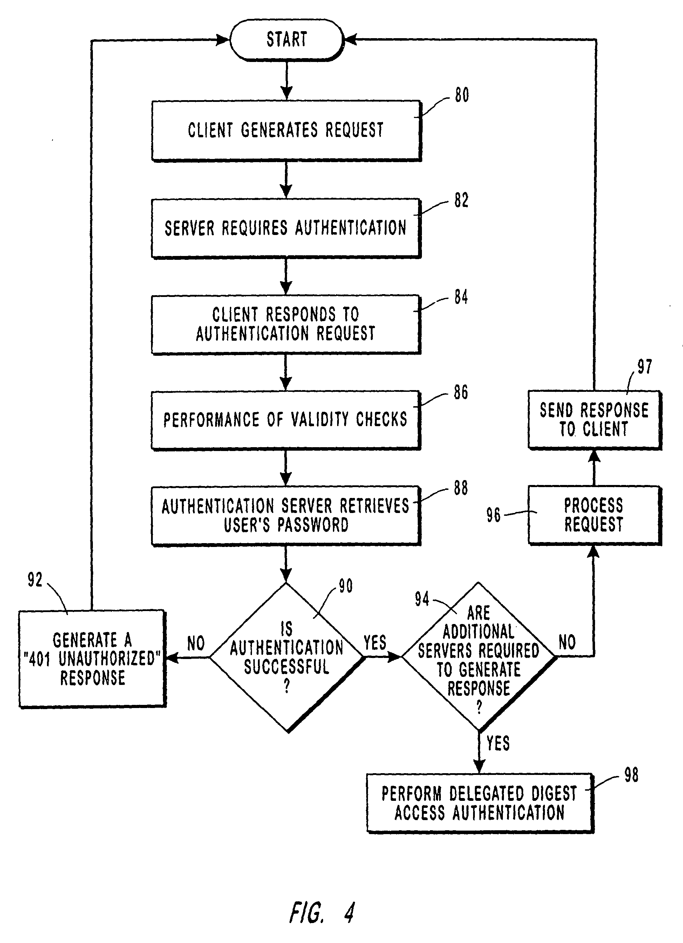

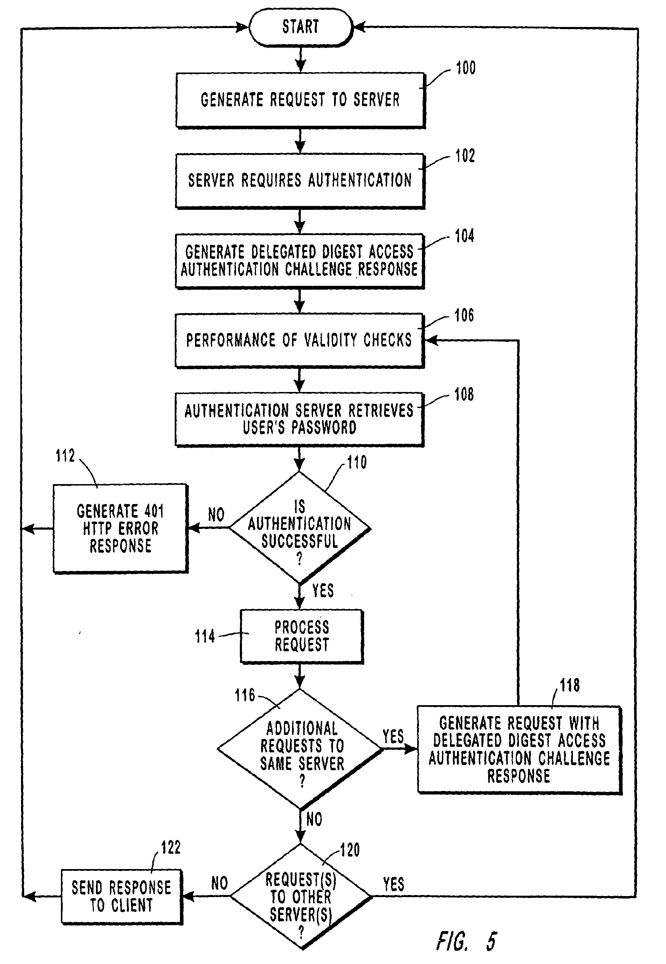

Figures 4 and 5 detail an exemplary embodiment in accordance with the present invention for obtaining resources and/or files from servers in a domain. Figure 4 details the initial request made by client 60 and the initial authentication exchange 61 to authenticate user identity to server 64. Figure 5 details server 64 acting on behalf of client 60 to obtain resources and/or files from servers 66 and 68 by respectively participating in delegated authentication exchanges 65 and 67. The exemplary configuration of Figure 3 will be used in the following description of the exemplary embodiment for obtaining resources and/or files from the servers in a domain as illustrated in Figures 4 and 5 in order to more clearly describe the embodiment.

In Figure 4, a remote client, such as, by way of example, client 60 of Figure 3, makes an HTTP request in step 80 for a resource or file ("R1") located on a server, such as, by way of example, server 64 of Figure 3. By way of example, the client request generated in step 80, including the message sent from client 60 to server 64 (indicated in bold), can be in the following encoded form:

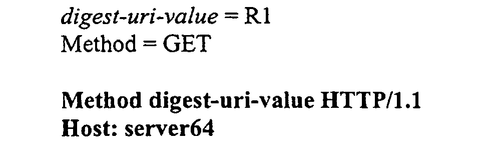

In step 82 the origin server, server 64, receives the HTTP request from client 60 and requires authentication of user identity at client 60 in order to access R1. Server 64 assembles an HTTP "401 Unauthorized" response since the client request did not include authentication header fields. The response to client 60 includes a server nonce ("nonce-value"), which is a base 64 encoded challenge that is unique. A server private key and a server-key are used to sign the server nonce through an MD5 hash. Items in calculations are unquoted before the operation is performed. Values in messages are quoted to facilitate parsing. By way of example, the server response of step 82 requiring authentication, including the message sent from server 64 to client 60 (indicated in bold), can be in the following encoded form:

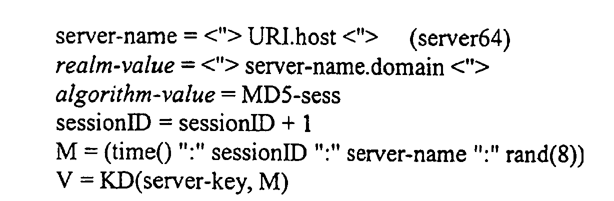

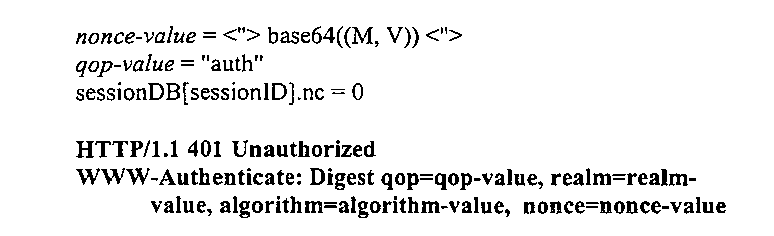

In step 84, client 60 receives the HTTP response from server 64 and responds by generating a digest access authentication response. The client response includes a unique client-generated nonce ("cnonce-value") in the authorization header field and a resubmission of a request for the resource or file ("R1"). By way of example, the client response generated in step 80, including the message sent from client 60 to server 64 (indicated in bold), can be in the following encoded form:

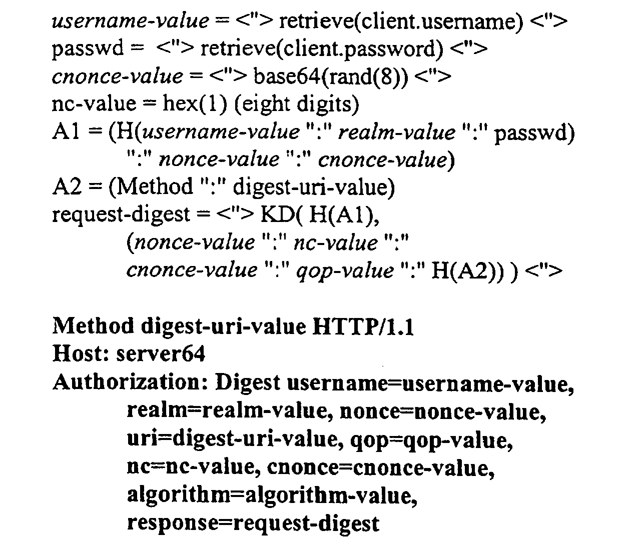

Once server 64 receives the client response to the authentication requirement a series of validity checks are performed in step 86. The client-generated nonce is checked for a valid hash with a known private server-key. The timestamp is checked for validity. If the timestamp has expired and the username and password are valid, a stale flag is returned to client 60. Alternatively if the timestamp is also valid, the authentication server is determined and authorization values are sent to be processed with the user's password. By way of example, the processing at server 64, including the authorization values sent from server 64 to authentication server 72 (indicated in bold), can be in the following encoded form:

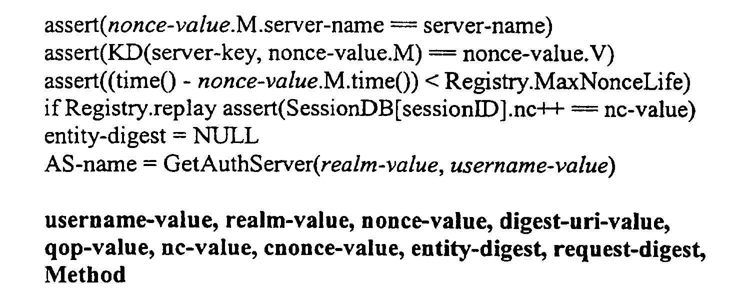

In step 88, using the username-value and realm-value, the authentication server 72 retrieves the user's password. Authentication server 72 also determines the server that is requesting the authentication and compares it with the server indicated in the generated nonce to compute the request-digest. If the request-digests are valid, the security context of username-value, sessionkey for server 64 and client 60, and max lifetime for the nonce are returned to server 64. By way of example, the computing at the authentication server 72, including the message sent from authentication server 72 to server 64 (indicated in bold), can be in the following encoded form:

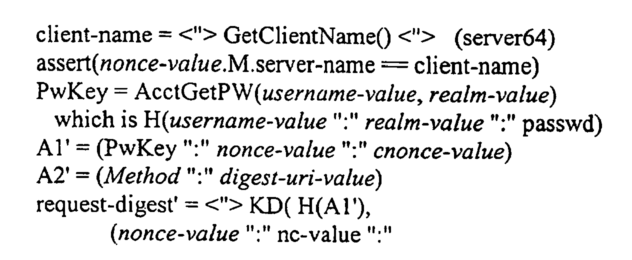

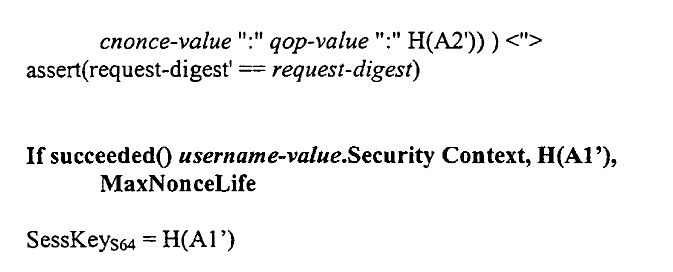

At decision block 90 it is determined whether or not the authentication is successful. If the authentication is not successful, execution proceeds to step 92, where a "401 Unauthorized" is generated and returned to client 60. Alternatively, if the authentication is successful then execution proceeds to decision block 94 for a determination of whether or not additional servers within the domain 74 are required to generate a response to client 60. If all of the resources and/or files requested by client 60 reside on server 64, then no additional servers are required to generate a response to client 60 and execution proceeds to step 96 where the client request is processed and to step 97 where the response is sent to client 60. Alternatively, if at decision block 94 it is determined that resources and/or files located on other servers within domain 74 are required to generate a response to client 60, execution proceeds to step 98 where server 64 performs delegated digest access authentication to obtain the required resources and/or files. Delegated digest access authentication must be utilized because server 64 has never known the user password. Instead, authentication server 72 keeps the password and a server 64 is informed that a client request is authorized.

Figure 5 illustrates the performance of delegated digest access according to step 98 of Figure 4, where the origin server, such as server 64, is empowered to request resources and/or files located on other servers within the same domain on behalf of a remote client, such as client 60. In one embodiment the access to delegation rights can be controlled, by way of example, by an authority parameter ("auth-param").

In step 100 of Figure 5 server 64 generates an HTTP request, which includes portions of the original request to client 60. The server request is sent to another server, such as server 66, of the domain 74 since server 64 requires resources and/or files ("R2") from server 66 in order to respond to the original request of client 60. The server 64 acts as an HTTP client. By way of example, the request from server 64, including the message sent from server 64 to server 66 (indicated in bold), can be in the following encoded form:

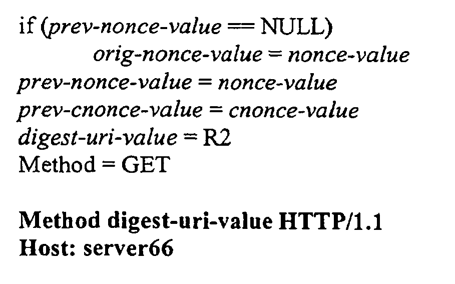

In step 102, server 66 receives the HTTP request from server 62 and requires authentication of user identity in order to provide access to R2 on server 66. An HTTP "401 Unauthorized" response is assembled by server 66 since the server 64 request did not include authentication header fields. The response from server 66 is a challenge that includes a server nonce ("nonce-value") that is a base 64 encoded unique value to the request from server 64. A server private key is used to sign the server nonce through an MD5 hash. By way of example, the server response of step 102 requiring authentication, including the message sent from server 66 to server 64 (indicated in bold), can be in the following encoded form:

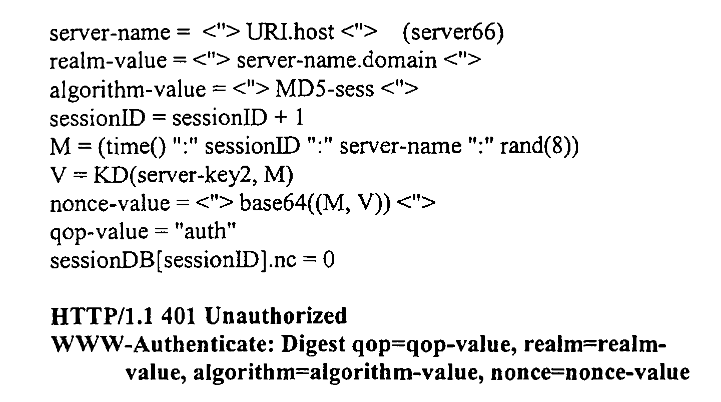

In step 104, server 64 receives the HTTP response from server 66 and responds by forming a delegated digest access authentication challenge response to the authentication challenge from server 66. The response is a delegated digest access authentication because the user password for client 60 is not available to server 64 for forming a digest request for R2 located on server 66. An embodiment of the present invention includes a parameter ("auth-param") for notifying the origin server parameters and identifying that the request is a delegated digest request. An embodiment further includes a parameter ("orig-request-nonce") in the request-digest calculation to provide limited lifetime requests. Server 64 generates a unique client nonce ("cnonce-value") and resubmits the request to server 66 for R2, however this time the request includes an authorization header-field. By way of example, the delegated digest access authentication challenge response, including the message sent from server 64 to server 66 (indicated in bold), can be in the following encoded form:

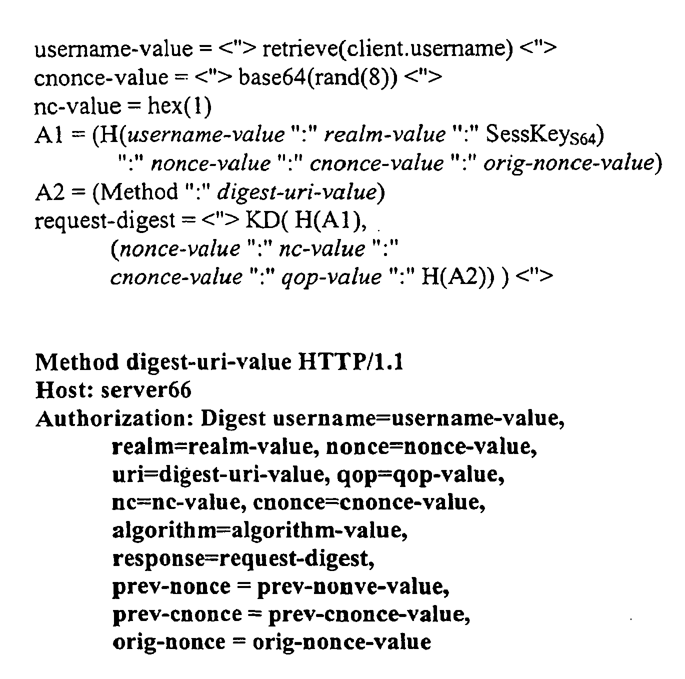

Once server 66 receives the response to the authentication requirement, a series of validity checks are performed in step 106. The nonce generated by server 64 is checked for a valid hash with a known private server-key. The timestamp is checked for validity. If the timestamp has expired and the username and password are valid, a stale flag is returned to server 64. Alternatively if the timestamp is valid, the authentication server is determined and authorization values are sent to be processed with the user's password. The orig-nonce parameter indicates that a delegated request is being made, validation steps are also conducted on the original nonce from client 60. If server 64 has signed the delegated request, the authentication server is determined and all authorization values are sent to be processed. The prev-nonce and prev-cnonce allows the authentication server 72 to calculate the sessionkey for the original request. By way of example, the processing at server 66, including the authorization values sent from server 66 to authentication server 72 (indicated in bold), can be in the following encoded form:

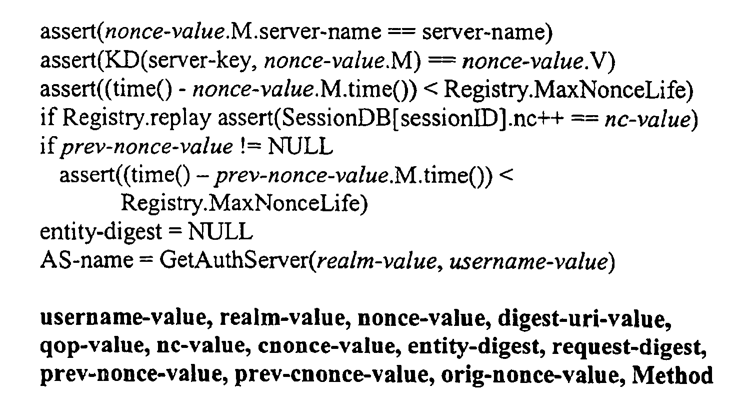

In step 108, using the username-value and realm-value, the authentication server 72 retrieves the user's password. Authentication server 72 also determines the server that is requesting the authentication and compares it with the server indicated in the generated nonce to compute the request-digest. If the original nonce, orig-nonce-value, has expired, then the authentication is rejected. If the request-digests are valid, the security context of username-value, sessionkey for server 66 and server 64, and max lifetime for the nonce are returned to server 66. By way of example, computing at the authentication server 72, including the message sent from authentication server 72 to server 66 (indicated in bold), can be in the following encoded form:

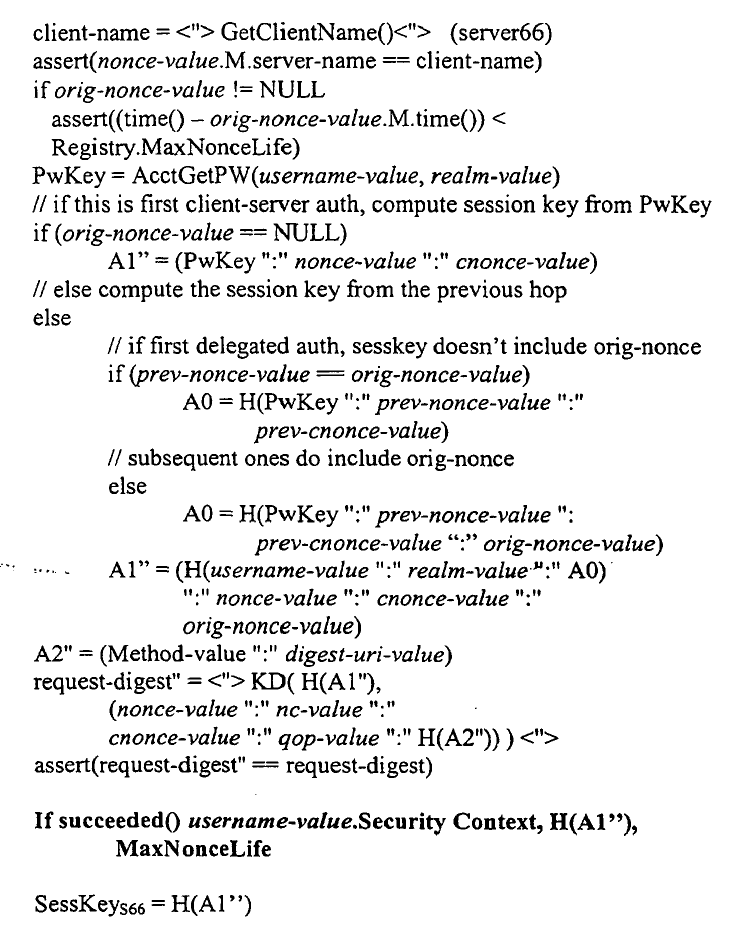

Execution then proceeds to decision block 110, where it is determined whether or not the authentication is successful. If the authentication is not successful, execution proceeds to step 112, where a "401 Unauthorized" is generated and returned to server 64. Alternatively, if decision block 110 determines that the authentication is successful then execution proceeds to step 114 where the request is processed.

Upon processing the request, decision block 116 determines whether or not additional requests are to be made to the same server, server 66. If it is determined at decision block 116 that additional requests need to be made to server 66, then server 64 generates a request for the resources and/or files with the delegated digest access authentication challenge response in step 118. The nonce count is incremented in step 118 before each additional request to server 66 (i.e. nc-value = nc-value + 1). Execution then returns back to step 106, where server 66 performs validity checks, and to step 108, where the authentication server 72 retrieves the user's password or uses sessionkey, SessKeyS64S66, for authorization processing. Decision block 110 determines for each request whether or not the authentication is successful and either a "401 Unauthorized" is returned to server 64 in step 112 or the request is processed in step 114. Decision block 116 determines whether or not additional request are to be made to the same server, server 66.

If decision block 116 determines that no additional requests are to be made to server 66, execution proceeds to decision block 120 to determine whether or not resources and/or files ("R3") need to be requested from other servers within the same domain, such as, by way of example, server 68 of domain 74, in order to process the original request from client 60. If it is determined that resources and/or files are needed, such as R3 from server 68, then server 64 generates a request to server 68 in step 100, server 68 requires authentication from server 64 in step 102, server 64 generates a delegated digest access authentication challenge response in step 104, validity checks are performed in step 106, authentication server 72 retrieves the user's password in step 108, decision block 110 determines whether or not authentication is successful and either returns a "401 Unauthorized" response in step 112 or the request is processed in step 114. Decision block 116 then determines whether or not additional requests are required to server 68.

Alternatively, if decision block 120 determines that no other requests are needed from other servers within the domain in order to process the original request from client 60, execution proceeds to step 122 where server 64 sends the originally requested resources and/or files in the form of a response to client 60.

The present invention may be embodied in other specific forms without departing from its essential characteristics. The described embodiments are to be considered in all respects only as illustrative and not restrictive. The scope of the invention is, therefore, indicated by the appended claims rather than by the foregoing description.

## Claims

1. A method for authenticating user identity in a networked computer system that includes a plurality of servers (20, 49a, 49b, 64, 66, 68, 72) within a domain (74), wherein a first server (64) of the plurality of servers acts on behalf of a client (60) to obtain a resource located on a second server (66, 68), the method comprising the acts of:
following an initial request (61, 80) for information sent from the client to the first server, sending an initial authentication (61, 84) from the client to the first server, wherein the initial authentication grants delegated rights for the first server to authenticate a request (65, 100) from the first server to the second server on behalf of the client;
sending the request from the first server to the second server,
verifying (65, 106-110) the authentication of the request from the first server; and
processing (65, 114) the request from the first server.

2. The method as recited in claim 1, wherein the act of sending employs standard Internet protocol.

3. The method as recited in claim 1 or 2, wherein the act of sending is performed via wireless communication.

4. The method as recited in one of claims 1 to 3, wherein the act of verifying includes the use of an authentication server (72) included in the networked computer system.

5. The method as recited in one of claims 1 to 4, wherein the act of verifying includes recomputing a hash function.

6. The method as recited in one of claims 1 to 5, wherein the delegated rights are controlled by the client.

7. The method as recited in one of claims 1 to 6, wherein:
the networked computer system further includes a domain controller (70) and one or more resources are provided from the plurality of servers to the client based on authorized user identity at the client;
the method further comprises requesting (61, 80) a resource located on one or more of the plurality of servers;
the sending of the initial authentication comprises issuing an originating digest access authentication from the client;
the method further comprises authenticating (61, 86-90) the originating digest access authentication by the first server,
the sending of the request from the first server to the second server comprises issuing (104) a delegated digest access authentication including the originating digest access authentication from the first server,
the verifying comprises authenticating the delegated digest access authentication by the second server, and
the processing of the request comprises processing the request for the resource.

8. The method as recited in claim 7, wherein the step for requesting the resource employs standard Internet protocol.

9. The method as recited in claim 7 or 8, wherein the originating digest access authentication is issued from the client via wireless communication.

10. The method as recited in one of claims 7 to 9, wherein the resource includes a file.

11. The method as recited in one of claims 7 to 10, wherein the originating digest access authentication specifies the scope of rights delegated by the client.

12. The method as recited in one of claims 7 to 11, wherein the second server authenticates the delegated digest access through the use of an authentication server (72).

13. A computer-readable medium (22, 29, 31, 39, 50a, 50b) including computer-exectuable instructions that, when executed by a computer system, cause the computer system to perform a method for authenticating user identity in a networked computer system that includes a plurality of servers (20, 49a, 49b, 64, 66, 68, 72) within a domain (74), wherein a first server (64) of the plurality of servers acts on behalf of a client (60) to obtain a resource located on a second server (66, 68), the method comprising the acts of:
following an initial request (61, 80) for information sent from the client to the first server, sending an initial authentication (61, 84) from the client to the first server, wherein the initial authentication grants delegated rights for the first server to authenticate a request (65, 100) from the first server to the second server on behalf of the client;
sending the request from the first server to the second server;
verifying (65, 106-110) the authentication of the request from the first server; and
processing (65, 114) the request from the first server.

14. The computer-readable medium as recited in claim 7, wherein the method for authenticating user identity employs standard Internet protocol.

15. The computer-readable medium as recited in claim 13 or 14, wherein the method for authenticating user identity includes recomputing a hash function.

16. The computer-readable medium as recited in one of claims 13 to 15, further including computer-readable instructions for performing each of the steps of the method as recited in one of claims 2 to 12.

17. A networked computer system that allows a resource to be obtained by a server (64) on behalf of a client (60), the resource obtained upon confirmation that the server is authorized by the client, comprising:
a first server (66, 68), wherein the resource is located on the first server;
a client (60), operated by a user, wherein, following an initial request (61, 80) for information sent from the client to a second server (64), the client issues an originating digest access authentication (61, 84) granting delegated rights for the second server to authenticate a request from the second server to the first server on behalf of the client; and
the second server in selective communication with the client and the first server, wherein the second server performs the specific acts of:
receiving the originating digest access authentication;
validating (61, 86-90) the identity of the client; and
confirming to the first server, through the issuance of a delegated digest access authentication (65, 104), that the second server is authorized by the client to obtain the resource located at the first server.

18. The networked computer system as recited in claim 17, wherein the first server and the second server are located within the same domain (74).

19. The networked computer system as recited in claim 18, wherein the domain further includes an authentication server (72).

20. The networked computer system as recited in claim 19, wherein the authentication server contains a password of the user.

## Patentansprüche

1. Verfahren zur Authentifizierung einer Nutzeridentität in einem vernetzten Computersystem, welches eine Vielzahl von Servern (20, 49a, 49b, 64, 66, 68, 72) innerhalb einer Domain (74) umfasst, wobei ein erster Server (64) der Vielzahl von Servern im Auftrag eines Clients (60) agiert, um eine Ressource zu erhalten, die auf einem zweiten Server (66,68) lokalisiert ist, wobei das Verfahren die folgenden Schritte umfasst:
in der Folge auf eine anfängliche, von dem Client an den ersten Server gesendete Anforderung (61,80) nach Information, Senden einer anfänglichen Authentifizierung (61, 84) von dem Client an den ersten Server, wobei die anfängliche Authentifizierung delegierte Rechte für den ersten Server zum Authentifizieren einer Anforderung (65, 100) von dem ersten Server an den zweiten Server im Auftrag des Clients gewährt;
Senden der Anforderung von dem ersten Server an den zweiten Server;
Verifizieren (65, 100 bis 110) der Authentifizierung der Anforderung von dem ersten Server; und
Verarbeiten (65, 114) der Anforderung von dem ersten Server.

2. Verfahren nach Anspruch 1, wobei der Schritt des Sendens ein Standard-Internetprotokoll verwendet.

3. Verfahren nach Anspruch 1 oder 2, wobei der Schritt des Sendens über eine drahtlose Kommunikation durchgeführt wird.

4. Verfahren nach einem der Ansprüche 1 bis 3, wobei der Schritt des Verifizierens eine Benutzung eines Authentifikationsservers (72), der in dem vernetzten Computersystem enthalten ist, umfasst.

5. Verfahren nach einem der Ansprüche 1 bis 4, wobei der Schritt des Verifizierens ein Wiederberechnen einer Hash-Funktion umfasst.

6. Verfahren nach einem der Ansprüche 1 bis 5, wobei die delegierten Rechte durch den Client gesteuert werden.

7. Verfahren nach einem der Ansprüche 1 bis 6, wobei:
das vemetzte Computersystem weiterhin einen Domain-Controller (70) umfasst und eine oder mehrere Ressourcen von der Vielzahl von Servern an den Client auf Basis einer autorisierten Nutzeridentität am Client bereitgestellt werden;
das Verfahren weiterhin ein Anfordern (61, 80) einer Ressource umfasst, die auf einem oder mehreren der Vielzahl von Servern lokalisiert ist;
das Senden der anfänglichen Authentifizierung ein Ausgeben einer verursachenden Auszugszugangsauthentifizierung (originating digest access authentication) von dem Client umfasst;
das Verfahren weiterhin eine Authentifizierung (61, 86 bis 90) der verursachenden Auszugszugangsauthentifizierung durch den ersten Server umfasst;
das Senden der Anforderung von dem ersten Server an den zweiten Server ein Abgeben (104) einer Delegierte-Rechte-Zugangsauthentifizierung, die die verursachende Auszugszugangsauthentifizierung enthält, von dem ersten Server umfasst;
die Verfizierung eine Authentifizierung der Delegierte-Rechte-Zugangsauthentifizierung durch den zweiten Server umfasst; und
die Verarbeitung der Anforderung ein Verarbeiten der Anforderung der Ressource umfasst.

8. Verfahren nach Anspruch 7, wobei der Schritt der Anforderung der Ressource ein Standard-Internetprotokoll verwendet.

9. Verfahren nach Anspruch 7 oder 8, wobei die verursachende Auszugszugangsauthentifizierung von dem Client über eine drahtlose Kommunikation abgegeben wird.

10. Verfahren nach einem der Ansprüche 7 bis 9, wobei die Ressource ein File enthält.

11. Verfahren nach einem der Ansprüche 7 bis 10, wobei die verursachende Auszugszugangsauthentifizierung den Umfang der durch den Client delegierten Rechte angibt.

12. Verfahren nach einem der Ansprüche 7 bis 11, wobei der zweite Server den Delegierte-Rechte-Zugang durch die Benutzung eines Authentifikationsservers (72) authentifiziert.

13. Computerlesbarer Datenträger (22, 29, 31, 39, 50a, 50b), welcher computerausführbare Befehle enthält, die, wenn sie durch ein Computersystem ausgeführt werden, das Computersystem dazu veranlassen, ein Verfahren zum Authentifizieren einer Nutzeridentität in einem vernetzten Computersystem, welches eine Vielzahl von Servern (20, 49a, 49b, 64, 66, 68, 72) innerhalb einer Domain (74) enthält, durchzuführen, wobei ein erster Server (64) der Vielzahl von Servern im Auftrag eines Clients (60) agiert, um eine Ressource zu erhalten, die auf einem zweiten Server (66, 68) lokalisiert ist, wobei das Verfahren folgende Schritte umfasst:
in der Folge auf eine anfängliche, von dem Client an den ersten Server gesendete Anforderung (61,80) nach Information, Senden einer anfänglichen Authentifizierung (61, 84) von dem Client an den ersten Server, wobei die anfängliche Authentifizierung delegierte Rechte für den ersten Server zum Authentifizieren einer Anforderung (65, 100) von dem ersten Server an den zweiten Server im Auftrag des Clients gewährt;
Senden der Anforderung von dem ersten Server an den zweiten Server;
Verifizieren (65, 100 bis 110) der Authentifizierung der Anforderung von dem ersten Server; und
Verarbeiten (65, 114) der Anforderung von dem ersten Server.

14. Computerlesbarer Datenträger nach Anspruch 7, wobei das Verfahren zum Authentifizieren einer Nutzeridentität ein Standard-Internetprotokoll verwendet.

15. Computerlesbarer Datenträger nach Anspruch 13 oder 14, wobei das Verfahren zur Authentifizierung einer Nutzeridentität ein Wiederberechnen einer Hash-Funktion umfasst.

16. Computerlesbarer Datenträger nach einem der Ansprüche 13 bis 15, weiterhin umfassend computerlesbare Befehle zur Durchführung jedes der Schritte des Verfahrens nach einem der Ansprüche 2 bis 12.

17. Vernetztes Computersystem, das es erlaubt, dass eine Ressource durch einen Server (64) im Auftrag eines Clients (60) erhalten wird, wobei die Ressource auf eine Bestätigung hin erhalten wird, dass der Server durch den Client autorisiert ist, umfassend:
einen ersten Server (66, 68), wobei die Ressource auf dem ersten Server lokalisiert ist;
einen Client (60), der durch einen Nutzer betrieben wird, wobei in der Folge auf eine anfängliche, von dem Client an einen zweiten Server (64) gesendete Anforderung (61, 80) nach Information, der Client eine verursachende Auszugszugangsauthentifizierung (originating digest access authentication) (61, 84) abgibt, welche delegierte Rechte für den zweiten Server zur Authentifizierung einer Anforderung von dem zweiten Server an den ersten Server im Auftrag des Clients gewährt; und
den zweiten Server in selektiver Kommunikation mit dem Client und dem ersten Server, wobei der zweite Server folgende spezifische Schritte durchführt:
Empfangen der verursachenden Auszugszugangsauthentifizierung;
Validieren (61, 86 bis 90) der Identität des Clients; und
Bestätigen an den ersten Server durch Abgabe einer delegierten Auszugszugangsauthentifizierung (delegated digest access authentication) (65, 104), dass der zweite Server durch den Client zum Erhalten der auf dem ersten Server lokalisierten Ressource autorisiert ist.

18. Vernetztes Computersystem nach Anspruch 17, wobei der erste Server und der zweite Server innerhalb der gleichen Domain (74) lokalisiert sind.

19. Vernetztes Computersystem nach Anspruch 18, wobei die Domain weiterhin einen Authentifizierungsserver (72) enthält.

20. Vernetztes Computersystem nach Anspruch 19, wobei der Authentifizierungsserver ein Passwort des Nutzers enthält.

## Revendications

1. Procédé pour authentifier l'identité d'un utilisateur dans un système informatique en réseau qui comprend plusieurs serveurs (20, 49a, 49b, 64, 66, 68, 72) à l'intérieur d'un domaine (74), dans lequel un premier serveur (64) agit sur demande d'un client (60) pour obtenir une ressource située sur un deuxième serveur (66, 68), le procédé comprenant les actions consistant à :
après une requête initiale (61, 80) concernant des informations envoyée du client au premier serveur, envoyer une authentification initiale (61, 84) du client au premier serveur, dans laquelle l'authentification initiale accorde des droits délégués pour que le premier serveur authentifie une requête (65, 100) du premier serveur au deuxième serveur sur demande du client ;
envoyer la requête du premier serveur au deuxième serveur ;
vérifier (65, 106 à 110) l'authentification de la requête en provenance du premier serveur ; et
traiter (65, 114) la requête en provenance du premier serveur.

2. Procédé selon la revendication 1, dans lequel l'action d'envoi utilise le protocole Internet standard.

3. Procédé selon la revendication 1 ou 2, dans lequel l'action d'envoi est effectuée par une communication sans fil.

4. Procédé selon l'une des revendications 1 à 3, dans lequel l'action de vérification comprend l'utilisation d'un serveur d'identification (72) inclus dans le système informatique en réseau.

5. Procédé selon l'une des revendications 1 à 4, dans lequel l'action de vérification comprend le recalcul d'une fonction de hachage.

6. Procédé selon l'une des revendications 1 à 5, dans lequel les droits délégués sont maîtrisés par le client.

7. Procédé selon l'une des revendications 1 à 6, dans lequel :
le système informatique en réseau comprend en outre une unité de commande de domaine (70) et une ou plusieurs ressources sont fournies par les serveurs au client sur la base de l'identité d'utilisateur autorisée au niveau du client ;
le procédé comprend en outre la requête (61, 80) d'une ressource située sur un ou plusieurs serveurs ;
l'envoi de l'authentification initiale comprend la délivrance d'une authentification d'accès Digest d'origine en provenance du client ;
le procédé comprend en outre l'authentification (61, 86 à 90) de l'authentification d'accès Digest d'origine par le premier serveur ;
l'envoi de la requête du premier serveur au deuxième serveur comprend la délivrance (104) d'une authentification d'accès Digest déléguée comprenant l'authentification d'accès Digest d'origine en provenance du premier serveur ;
la vérification comprend l'authentification de l'authentification d'accès déléguée par le deuxième serveur ; et
le traitement de la requête comprend le traitement de la demande de la ressource.

8. Procédé selon la revendication 7, dans lequel l'étape consistant à requérir la ressource utilise le protocole Internet standard.

9. Procédé selon la revendication 7 ou 8, dans lequel l'authentification d'accès Digest d'origine est délivrée en provenance du client par une communication sans fil.

10. Procédé selon l'une des revendications 7 à 9, dans lequel la ressource comprend un fichier.

11. Procédé selon l'une des revendications 7 à 10, dans lequel l'authentification d'accès Digest d'origine spécifie l'étendue de droits délégués par le client.

12. Procédé selon l'une des revendications 7 à 11, dans lequel le deuxième serveur authentifie l'accès Digest délégué à l'aide d'un serveur d'identification (72).

13. Support lisible par ordinateur (22, 29, 31, 39, 50a, 50b) comprenant des instructions exécutables par ordinateur qui, lorsqu'elles sont exécutées par un système informatique, amènent le système informatique à effectuer un procédé pour authentifier l'identité d'un utilisateur dans un système informatique en réseau qui comprend plusieurs serveurs (20, 49a, 49b, 64, 66, 68, 72) à l'intérieur d'un domaine (74), dans lequel un premier serveur (64) agit sur demande d'un client (60) pour obtenir une ressource située sur un deuxième serveur (66, 68), le procédé comprenant les actions consistant à :
après une requête initiale (61, 80) concernant des informations envoyée du client au premier serveur, envoyer une authentification initiale (61, 84) du client au premier serveur, dans laquelle l'authentification initiale accorde des droits délégués pour que le premier serveur authentifie une requête (65, 100) du premier serveur au deuxième serveur sur demande du client ;
envoyer la requête du premier serveur au deuxième serveur ;
vérifier (65, 106 à 110) l'authentification de la requête en provenance du premier serveur ; et
traiter (65, 114) la requête en provenance du premier serveur.

14. Support lisible par ordinateur selon la revendication 7, dans lequel le procédé pour authentifier l'identité d'un utilisateur utilise le protocole Internet standard.

15. Support lisible par ordinateur selon la revendication 13 ou 14, dans lequel le procédé pour authentifier l'identité d'un utilisateur comprend le recalcul d'une fonction de hachage.

16. Support lisible par ordinateur selon l'une des revendications 13 à 15, comprenant en outre des instructions lisibles par ordinateur pour effectuer chacune des étapes du procédé selon l'une des revendications 2 à 12.

17. Système informatique en réseau qui permet à une ressource d'être obtenue par un serveur (64) sur demande d'un client (60), la ressource obtenue lors de la confirmation que le serveur est autorisé par le client, comprenant :
un premier serveur (66, 68), la ressource étant située sur le premier serveur ;
un client (60), mis en oeuvre par un utilisateur, dans lequel, après une requête initiale (61, 80) concernant des informations envoyée du client à un deuxième serveur (64), le client délivre une authentification d'accès Digest d'origine (61, 84) accordant des droits délégués pour que le deuxième serveur authentifie une requête du deuxième serveur au premier serveur sur demande du client ; et
le deuxième serveur en communication sélective avec le client et le premier serveur, dans lequel le deuxième serveur effectue les actions spécifiques consistant à :
recevoir l'authentification d'accès Digest d'origine ;
valider (61, 86 à 90) l'identité du client ; et
confirmer au premier serveur, par la délivrance d'une authentification d'accès Digest déléguée (65, 104), que le deuxième serveur est autorisé par le client à obtenir la ressource située au niveau du premier serveur.

18. Système informatique en réseau selon la revendication 17, dans lequel le premier serveur et le deuxième serveur sont situés à l'intérieur du même domaine (74).

19. Système informatique en réseau selon la revendication 18, dans lequel le domaine comprend en outre un serveur d'identification (72).

20. Système informatique en réseau selon la revendication 19, dans lequel le serveur d'identification contient un mot de passe de l'utilisateur.
